# EUROPEAN PATENT APPLICATION

(11) **EP 1 640 104 A2**
(43) Date of publication of application: **29.03.2006**
(21) Application number: 05256013.3
(22) Date of filing: 27.09.2005
(51) Int. Cl.: B23K 20/16

(54) **Method of welding galvanized steel components**

(30) Priority: 27.09.2004 US 613254 P
(71) Applicant: DANA CORPORATION, Toledo, OH 43615 (US)
(72) Inventor: Musselman, Gary H, Adamstown Pennsylvania 19501 (US)
(74) Representative: Giles, Ashley Simon

(57) **Abstract**

A method of welding first and second metallic components together includes the initial step of comprising the steps of providing a first metallic component including a surface having a galvanic coating provided thereon and providing a second metallic component including a surface. A material is sprayed onto at least a portion of either the galvanic coating provided on the surface of the first metallic component or the surface of the second metallic component. The surfaces of the first and second metallic components are disposed in an overlapping relationship, and a welding process is performed to weld the first and second metallic components together. The sprayed material reacts with the galvanic coating during the welding process minimize the vaporization of the galvanic coating and, thus, adversely affect the quality of the weld.

## Description

### BACKGROUND OF THE INVENTION

This invention relates in general to methods of welding components that are formed from metallic materials and that have one or more coatings provided thereon, such as galvanic coatings to minimize or prevent corrosion. In particular, this invention relates to an improved method of quickly and easily applying a layer of an alloyable material between first and second galvanized metallic components to facilitate the use of a welding process by minimizing the vaporization of such galvanic coatings.

Conventional welding techniques are commonly used to permanently join two or more components that are formed from metallic materials, such as components of a vehicle body and frame assembly. As is well known, conventional welding techniques involve the application of heat to localized areas of two metallic members, which results in a coalescence of the metallic materials of the two members. Such welding may or may not be performed with the application of pressure and may or may not include the use of a filler metal. A movable welding tool is typically used to apply the heat to the localized areas of two metallic members and to supply the filler material when desired.

One conventional welding technique that is commonly used to secure first and second metallic components together is known as high energy density radiation beam welding. High energy density radiation beam welding involves the use of a welding tool that emits an energy beam toward the overlapping portions of the first and second metallic components. In one known type of high energy density radiation beam welding, a laser welder is used to direct a highly focused beam of light energy onto one or both of the first and second metallic components to join them together. In another known type of high energy density radiation beam welding, an electron beam welder is used to direct a stream of electrons onto one or both of the first and second metallic components to join them together. In both instances, the energy beam can be directed against the upper surface of the first metallic component with sufficient energy density and for a sufficient period of time as to penetrate completely through the first metallic component and at least partially into the second metallic component. As a result, the adjacent portions of the first and second metallic components are caused to coalesce and, thus, be permanently joined together.

Although conventional welding techniques such as these have functioned satisfactorily in the past, there are some drawbacks to the use thereof, particularly when one or more of the surfaces of the metallic components is provided with a galvanic coating provided thereon to prevent corrosion. Galvanizing is a well known process for applying a coating of a material, typically zinc or an alloy thereof, to the surface of a steel or other metallic component to prevent corrosion from occurring. Galvannealing is a variant on the galvanizing process wherein the coated piece of steel is heated immediately after coating (typically using induction coils or gas-fired burners) to create a controlled, heavy iron-zinc layer for improved weld-ability, paintability, and abrasion resistance.

It has been found that the galvanic coating or coatings provided on the abutting surfaces of the first and second metallic components can vaporize violently when heated during the welding process, such as during the above-described high energy density radiation beam welding process. Such violent vaporization can rapidly and undesirably generate gases that can cause porosity in the area of the weld and, thus, adversely affect the quality of the joint between the first and second metallic components.

To minimize or prevent this from occurring, it is known to dispose a layer of an alloyable material between the overlapping portions of the first and second metallic components prior to initiating the welding process. This alloyable material (which can, for example, be formed from copper or nickel) alloys with the zinc during the welding process to prevent the undesirable violent formation of gases and consequent excessive weld porosity. In the past, the alloyable material has been provided in the form of a thin, solid sheet of material, such as a foil sheet of the alloyable material. The foil sheet of the alloyable material was interposed between the first and second metallic components prior to the initiation of the welding process. Although effective, the handling and application of the foil sheet of the alloyable material has been found to be relatively time consuming and inefficient, particularly in the context of a high volume manufacturing environment. Thus, it would be desirable to provide an improved method of quickly and easily applying a layer of an alloyable material between first and second galvanized metallic components to minimize the vaporization of the galvanic coating and thereby facilitate the use of welding techniques.

### SUMMARY OF THE INVENTION

This invention relates to method of quickly and easily applying a layer of an alloyable material between first and second galvanized metallic components to minimize the vaporization of the galvanic coating and thereby facilitate the use of welding techniques. Initially, first and second metallic components are provided. The first metallic component includes a surface having a galvanic coating provided thereon, while the second metallic component includes a surface. A material, such as an alloyable material, is sprayed onto at least a portion of either the galvanic coating provided on the surface of the first metallic component or the surface of the second metallic component. The surfaces of the first and second metallic components are then disposed in an overlapping relationship, and a welding process is performed to weld the first and second metallic components together. The sprayed material reacts with the galvanic coating during the welding process minimize the vaporization of the galvanic coating and, thus, adversely affect the quality of the weld.

Various objects and advantages of this invention will become apparent to those skilled in the art from the following detailed description of the preferred embodiment, when read in light of the accompanying drawings.

### BRIEF DESCRIPTION OF THE DRAWINGS

Fig. 1 is a perspective view showing a first step in the method of this invention, wherein a layer of a material, such as an alloyable material, is applied to a first metallic component.

Fig. 2 is an enlarged sectional elevational view of a portion of the first metallic component and the layer of the alloyable material illustrated in Fig. 1.

Fig. 3 is a perspective view showing a second step in the method of this invention, wherein a second metallic component is disposed in an overlapping relationship with the first metallic component illustrated in Figs. 1 and 2.

Fig. 4 is a perspective view showing a third step in the method of this invention, wherein the first and second metallic components are welded together by a welding tool.

Fig. 5 is an enlarged sectional elevational view of a portion of the welded joint formed between the first and second metallic components by the welding tool illustrated in Fig. 4.

### DETAILED DESCRIPTION OF THE PREFERRED EMBODIMENT

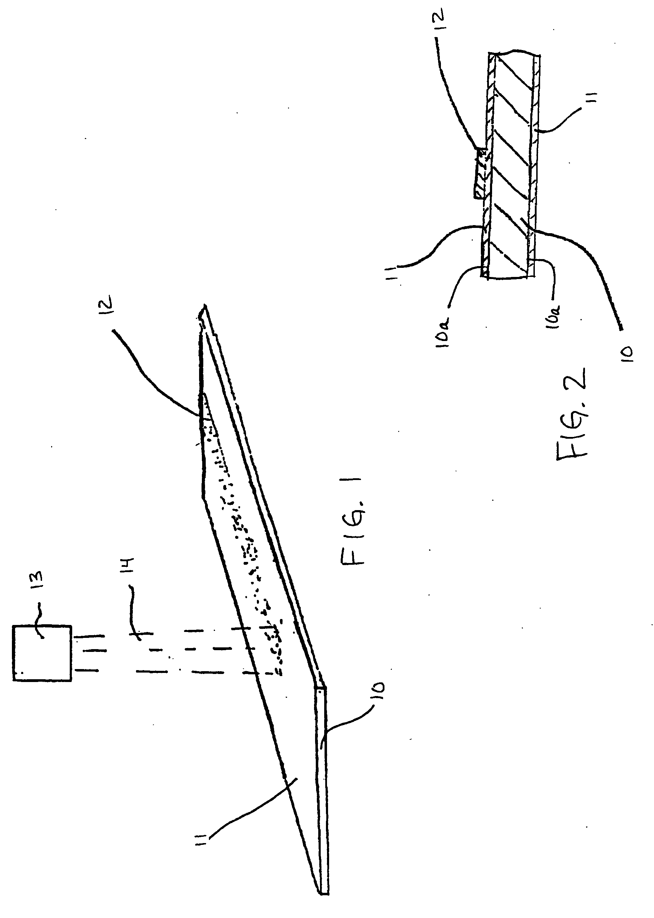

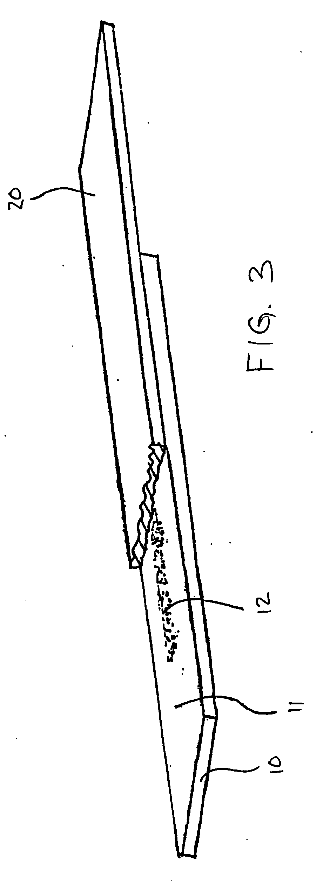

Referring now to the drawings, there is illustrated in Fig. 1 a first metallic component 10 that can be used in accordance with the method of this invention. In the illustrated embodiment, the first metallic component 10 is relatively thin and planar in shape. However, the first metallic component 10 may be formed having any desired thickness or shape. Thus, the illustrated first metallic component 10 should be viewed as being representative of any desired first metallic component that can be secured to a second component (see Figs. 3, 4, and 5) in the manner described below. The first metallic component 10 may be formed from any desired metallic material. For example, the first metallic component 10 may be formed from a steel alloy material.

As best shown in Fig. 2, the illustrated first metallic component 10 includes a pair of opposed surfaces 10a. A conventional galvanic coating 11 is provided on each of the opposed surfaces 10a of the illustrated first metallic component 10. In the illustrated embodiment, the galvanic coating 11 extends completely across both of the opposed surfaces 10a of the first metallic component 10. However, it will be appreciated that the galvanic coatings 11 may be applied to only portions of the opposed surfaces 10a of the first metallic component 10. Furthermore, it will be appreciated that a galvanic coating 11 may be applied to some or all of only one of the opposed surfaces 10a of the first metallic component 10 if desired. Also, as will become apparent below, the first metallic component 10 may have no galvanic coatings 11 applied thereto (in this instance, a galvanic coating 11 would be applied to one or both of the opposed surfaces of the second metallic component, as will become apparent below). The galvanic coating 11 is typically formed from zinc, or an alloy thereof, and may be applied to the first component 10 by any conventional process, such as by galvanizing or galvannealing, as described above.

In a first step of the method of this invention illustrated in Fig. 1, a layer 12 of a material is applied to at least a portion of at least one of the galvanic coatings 11 provided on at least one of the opposed surfaces 10a of the first component 10. The specific composition of the material that is used to create the layer 12 will be discussed below. However, the material that used to create the layer 12 is preferably provided in a form that facilitates its application to the surface of the first component 10 in a quick and easy manner. Preferably, the material used to form the layer 12 is provided in a physical form that allows it to be applied to the surface of the first component 10 by spraying. Spraying is a conventional process that, generally speaking, causes relatively small amounts of the material to be directed in a jet-like form or otherwise dispersed in a spray or spray-like form onto the surface of the first component 10. The spraying may or may not include the use of air or other gaseous substance to entrain the material within the jet-like spray. To facilitate this, the material used to form the layer 12 is preferably provided in a readily sprayable form, such as in a liquid, powdered, or particulate form.

A spraying apparatus 13 can be provided to generate a spray 14 of the material onto the surface of the first component 10. The spraying apparatus 13 is, of itself, conventional in the art and may be embodied as any desired apparatus for applying the spray 14 of the material to create the layer 12 on the surface of the first component 10. If the material used to form the layer 12 is provided in a liquid form, the spraying apparatus 13 may include a heater (not shown) for maintaining the liquid material at a predetermined or desired temperature (e.g., above the melting point of a metallic material to be sprayed). For example, the spraying apparatus 13 can be used to perform a conventional thermal spraying process, such as plasma-arc spraying, flame spraying, or electric-arc spraying. If desired, the spraying apparatus 13 may include a controllable spray outlet (not shown) that can be operated in any conventional manner to apply the layer 12 of the material along any desired path or paths along the surface of the first component 10 and in any desired shape or shapes.

Fig. 3 shows a second step in the method of this invention, wherein a second metallic component 20 is disposed in an overlapping relationship with the first metallic component illustrated in Figs. 1 and 2. In the illustrated embodiment, the second metallic component 20 is relatively thin and planar in shape. However, the second metallic component 20 may be formed having any desired thickness or shape. Thus, the illustrated second metallic component 20 should be viewed as being representative of any desired second metallic component that can be secured to the first metallic component 10 in the manner described below. The second metallic component 20 may be formed from any desired metallic material. For example, like the first metallic component 10, the second metallic component 20 may also be formed from a steel alloy material. As shown in Fig. 3, the second metallic component 20 is disposed adjacent to, and preferably in abutment with, the first metallic component 10 such that the layer of material 12 is disposed therebetween. If desired, the second metallic component 20 may be provided with a galvanic coating (not shown), either in addition to the galvanic coating 11 that is provided on the first metallic component 10 or in lieu thereof.

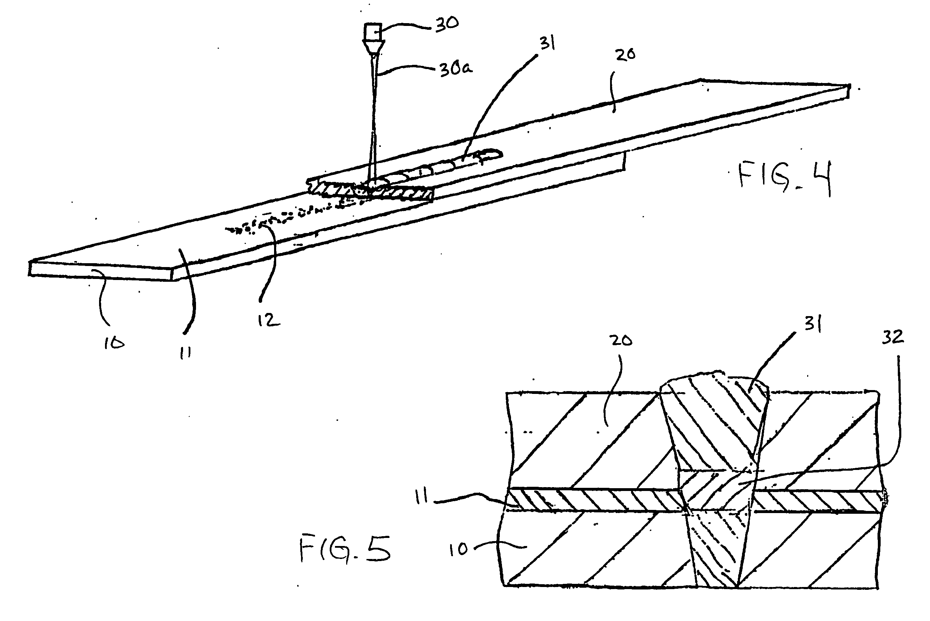

Fig. 4 shows a third step in the method of this invention, wherein the first and second metallic components 10 and 20 are welded together by a welding tool 30. The welding tool 30 is conventional in the art and is adapted to apply heat to localized areas of the first and second metallic components 10 and 20, which results in a coalescence of the metallic materials of the first and second metallic components 10 and 20. Such welding may or may not be performed with the application of pressure, and may or may not include the use of a filler metal. The illustrated welding tool 30 is typically used to apply the heat to the localized areas of two metallic members and to supply the filler material when desired.

The welding tool 30 may, for example, be a conventional high energy density radiation beam welding tool. High energy density radiation beam welding involves the use of a welding tool that emits an energy beam 30a toward the overlapping portions of the first and second metallic components 10 and 20. Laser welders direct a highly focused beam of light energy onto one or both of the first and second metallic components 10 and 20 to join them together. Electron beam welders, on the other hand, direct a stream of electrons onto the first and second metallic components 10 and 20 to heat and fuse them together. In both instances, the beam 30a is directed against the upper surface of the second metallic component 20 with enough energy density and for a sufficient period of time as to penetrate completely through the second metallic component 20 and at least partially through the first metallic component 10 so as to cause the adjacent portions to coalesce (such as shown at 31 in Figs. 4 and 5) and, thus, be permanently joined together.

As mentioned above, the galvanic coating 11 provided on the either (or both) of the first and second metallic components 10 and 20 can vaporize violently when heated during the welding process, such as during the above-described high energy density radiation beam welding process. Such violent vaporization can rapidly and undesirably generate gases that can cause porosity in the area of the weld and, thus, adversely affect the quality of the joint therebetween. To prevent this from occurring, the layer 12 of the material is provided between the first and second metallic components 10 and 20. The material used to form the layer 12 can be embodied as any material that will reduce or eliminate the violent vaporization of the galvanic coating 11 provided on the either (or both) of the first and second metallic components 10 and 20. Preferably, the material used to form the layer 12 is an alloyable material (such as copper or nickel, for example) that alloys with the galvanic coating 11 (zinc, for example) during the welding process to prevent the undesirable violent formation of gases and consequent excessive weld porosity. Thus, following the performance of the welding process, the welded region 31 between the first and second metallic components 10 and 20 can include a region 32 of alloyed material.

Thus, it will be appreciated that the layer 12 of the material is preferably applied wherever the welding tool 30 is to be used to perform the welding operation between the first and second metallic components 10 and 20. During the welding process, the welding tool 30 is typically moved relative to the stationary first and second metallic components 10 and 20 to perform the welding operation. However, the first and second metallic components 10 and 20 may be moved relative to the stationary welding tool 30 to perform the welding operation. Alternatively, both the first and second metallic components 10 and 20 and the welding tool 30 can be simultaneously moved relative to one another to perform the welding operation if desired.

In accordance with the provisions of the patent statutes, the principle and mode of operation of this invention have been explained and illustrated in its preferred embodiment. However, it must be understood that this invention may be practiced otherwise than as specifically explained and illustrated without departing from its spirit or scope.

## Claims

1. A method of welding first and second metallic components together comprising the steps of:
(a) providing a first metallic component including a surface having a coating provided thereon;
(b) providing a second metallic component including a surface;
(c) spraying a material onto at least a portion of either (1) the coating provided on the surface of the first metallic component or (2) the surface of the second metallic component;
(d) disposing the surfaces of the first and second metallic components in an overlapping relationship; and
(e) performing a welding process to weld the first and second metallic components together such that the sprayed material reacts with the coating during the welding process.

2. The method defined in Claim 1 wherein said step (a) is performed by providing the first metallic component with a galvanic coating.

3. The method defined in Claim 2 wherein said step (a) is performed by providing the first metallic component with a coating formed from zinc or an alloy thereof.

4. The method defined in Claim 1 wherein said step (a) is performed by forming the first metallic component from a steel alloy material.

5. The method defined in Claim 1 wherein said step (b) is performed by forming the second metallic component from a steel alloy material.

6. The method defined in Claim 1 wherein said step (c) is performed by spraying a material onto at least a portion of the coating provided on the surface of the first metallic component.

7. The method defined in Claim 1 wherein said step (c) is performed by spraying a material that will alloy with the coating during the welding process.

8. The method defined in Claim 1 wherein said step (c) is performed by spraying a material in either a liquid form, a powdered form, or a particulate form.

9. The method defined in Claim 1 wherein said step (e) is performed by performing either a high energy density radiation beam welding process, a laser welding process, or an electron beam welding process.
